# EUROPÄISCHE PATENTSCHRIFT

(11) **EP 3 683 469 B1**
(45) Veröffentlichungstag und Bekanntmachung des Hinweises auf die Patenterteilung: **31.07.2024**
(21) Anmeldenummer: 19211384.3
(22) Anmeldetag: 26.11.2019
(51) Int. Cl.: F16F 1/54, F16F 1/373

(54) **GERÄTE- UND ANTI-VIBRATIONSLAGER UND EINE GERÄTE- UND ANTI-VIBRATIONSLAGERANORDNUNG**
DEVICE AND ANTI-VIBRATION BEARING AND DEVICE AND ANTI-VIBRATION BEARING ARRANGEMENT
APPAREIL ET PALIER ANTI-VIBRATION ET AGENCEMENT D'APPAREIL ET DE PALIER ANTI-VIBRATION

(30) Priorität: 18.12.2018 DE 102018222116
(43) Veröffentlichungstag der Anmeldung: 22.07.2020
(73) Patentinhaber: Willbrandt KG, 22525 Hamburg (DE)
(72) Erfinder: SCHMIED, Jürgen, 21244 Buchholz i.d. Nordheide (DE)
(74) Vertreter: Müller Verweyen

(56) Entgegenhaltungen:
- DE-B- 1 197 694
- DE-U1- 20 205 376
- FR-A- 1 219 468
- FR-A1- 2 349 067
- GB-A- 2 438 862
- US-A- 5 516 074
- US-B1- 6 695 296

## Beschreibung

Die vorliegende Erfindung betrifft ein Geräte- und Anti-Vibrationslager mit den Merkmalen des Oberbegriffs von Anspruch 1 und eine Geräte- und Anti-Vibrationslageranordnung mit den Merkmalen des Oberbegriffs von Anspruch 9.

Geräte- und Anti-Vibrationslager schützen insbesondere elektronische Geräte, Aggregate und Anlagen vor Vibrationen und Stoßbelastungen eines beweglichen Fundamentes. Im Umkehrschluss wird auch das Fundament durch das Geräte- und Anti-Vibrationslager vor den Schwingungen des Gerätes, des Aggregates oder der Anlage geschützt. Das Geräte- und Anti-Vibrationslager dient praktisch einer Entkopplung des Gerätes, des Aggregates oder der Anlage von dem Fundament. Solche Geräte- und Anti-Vibrationslager werden insbesondere im Schiffbau, im Transportwesen oder auch in der Industrie zur Lagerung von Geräten, Aggregaten und Anlagen mit einer großen Masse verwendet und sind dazu eingerichtet in allen Achsen statische und dynamische Lasten aufzunehmen. Ein besonderes Problem stellt dabei die Lagerung von Geräten auf Marineschiffen dar, welche z.B. durch Minendetonationen, Granatangriffen oder dergleichen besonders starken Belastungen ausgesetzt sind, welche z.B. zu einem schockartigen Anheben oder seitliches Ausweichen des Marineschiffes führen können. Die durch das schockartige Anheben oder Ausweichen des Marineschiffes erzeugten, auf die Geräte einwirkenden Belastungen müssen durch eine entsprechende Auslegung der Gerätelager begrenzt werden, wozu die Gerätelager einen entsprechenden Federweg des Schiffes zu dem Gerät bzw. umgekehrt ermöglichen müssen.

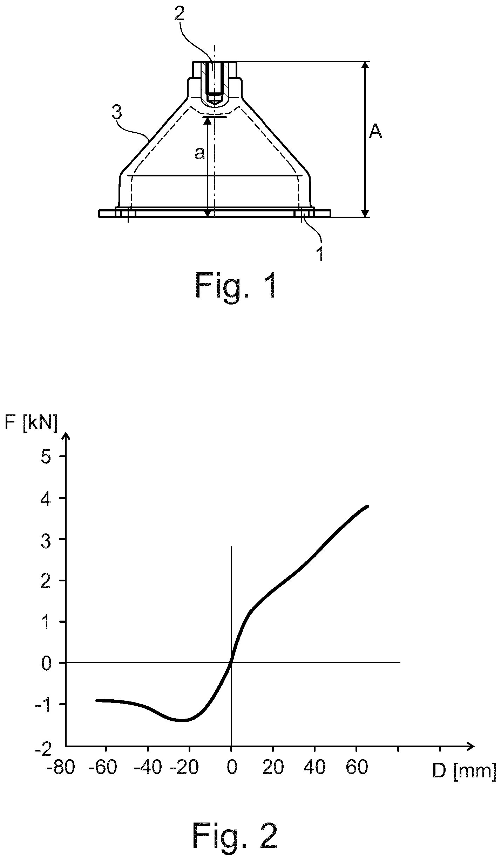

Aus dem Hause der Anmelderin ist ein konusförmiges, rotationssymmetrisches Geräte- und Anti-Vibrationslager mit der Bezeichnung SES 1020 bekannt, welches in der Figur 1 in einer Schnittdarstellung dargestellt ist. Das Geräte- und Anti-Vibrationslager weist einen hutförmigen, elastischen Dämpfungskörper 3 auf, welcher an seiner Unterseite eine erste ringförmige Befestigungsplatte 1 zur Befestigung an einem Fundament und an seiner Oberseite eine zweite Befestigungsplatte 2 zur Befestigung eines zu lagernden Gerätes aufweist. Die erste Befestigungsplatte 1 weist einen Abstand A von der Krafteinleitungsfläche der zweiten Befestigungsplatte 2 auf, welcher der Einbauhöhe des nichtbelasteten bzw. unverformten Geräte- und Anti- Vibrationslagers entspricht. Der maximale Einfederweg ist durch die Höhe a des Hohlraumes in dem hutförmigen Dämpfungskörper 3 des Geräte- und Anti-Vibrationslager begrenzt. Die Krafteinleitungsflächen der ersten und zweiten Befestigungsplatte sind konzentrisch zueinander angeordnet, so dass der Dämpfungskörper beim Einfedern zentrisch komprimiert wird, und durch seine Hutform dabei zentrisch gestaucht bzw. gefaltet wird.

In der Figur 2 ist die Federkennlinie des Geräte- und Anti-Vibrationslagers aus der Figur 1 zu erkennen, wobei die ausgeübte Kraft F über dem Verformungsweg D dargestellt ist. Wie der Kurve zu entnehmen ist, ist die Kraft F ausgehend von dem unverformten Zustand D=0 in Bezug zu dem Verformungsweg D bei der Ausübung von Zugkräften nahezu linear, während die Kraft F bei der Ausübung von Druckkräften in einem nichtlinearen Zusammenhang mit einem ausgeprägten Extremwert bei -20 mm zu dem Verformungsweg D steht. Die dargestellte Kennlinie wird aufgrund des Extremwertes bei der Ausübung von Druckkräften auch als Frosch-Kennlinie bezeichnet. Die bei dem Extremwert von -20 mm wirkende Kraft von -1,5 kN ist dabei die maximal von dem Geräte- und Anti-Vibrationslager aufzunehmende Reaktionskraft, welche ihrerseits in Verbindung mit der Masse des zu lagernden Gerätes auch maßgebend für die Belastung des Gerätes ist.

Nachteilig bei dieser Lösung ist es, dass der maximale Einfederweg und die maximal aufzubringende Reaktionskraft durch die Hutform des Geräte- und Anti-Vibrationslagers begrenzt sind. Dies liegt auch daran, dass durch die Form des Geräte- und Anti-Vibrationslagers nur ein Teil des Werkstoffes an der Verformung teilnimmt und damit auch nur einen Teil zu der Dämpfung beiträgt. Ferner wird die Wandung des hutförmigen Geräte- und Anti-Vibrationslagers über den gesamten Umfang verformt, und die gegenüberliegenden Wandabschnitte wirken bei der Verformung gegeneinander, indem sie sich bei der Verformung gegenseitig stützen und dadurch die Verformung des jeweils anderen Abschnittes begrenzen.

Es ist ferner aus der GB 2 438 862 A ein Antivibrationslager aus einem elastischen Körper mit einer Längsachse und gegenüberliegenden Enden bekannt. Jedes Ende des Körpers ist mit zylindrischen Schraubgewinde-Befestigungsmitteln versehen, die die Form von Stiftschrauben mit Außengewinde oder von Löchern mit Innengewinde haben können, wobei die Achsen der Schraubgewinde-Befestigungsmittel parallel zueinander verlaufen und zur Längsachse des Körpers geneigt sind. Die GB 2 438 862 A offenbart den Oberbegriff des Anspruchs 1.

Die US 5 516 074 A offenbart ein Dämpfungskissen aus Gummi, wobei das Kissen verformbar und flexibel ist, um Stöße zu absorbieren oder zu dämpfen. Das Kissen besteht aus einem Paar symmetrischer Zylinder, die durch eine verstärkte Rippe einstückig miteinander verbunden sind. Jeder Zylinder hat an einem Ende eine ebene Oberfläche, die in der Mitte ein Schraubenloch und am gegenüberliegenden Ende eine konvexe oder halbkugelförmige Oberfläche aufweist.

Aus der DE 11 97 694 B ist ein elastisches Lager bekannt, welches ein schräg zur Belastungsrichtung liegenden Gummikörper und zwei starre Winkelprofile aufweist, die mit dem Gummikörper verbunden sind.

Die FR 1 219 468 A offenbart einen dämpfenden Lagerblock für Maschinen, der zwischen zwei U-Profilen eingesetzt ist.

Aus der Druckschrift FR 2 349 067 ist ferner eine Pufferfeder bekannt, welche durch einen strangförmigen langgestreckten Kern mit einem Elastomermantel gebildet ist, der zur einer S-Form gebogen ist und zwei koaxial zueinander ausgerichtete Befestigungsansätze aufweist.

Vor diesem Hintergrund liegt der Erfindung die Aufgabe zugrunde, ein Geräte- und Anti-Vibrationslager bereitzustellen, welches höhere Federwege bei gleichzeitig möglichst gleichen oder nur geringfügig größeren Abmessungen ermöglicht.

Erfindungsgemäß werden zur Lösung der Aufgabe ein Geräte- und Anti-Vibrationslager mit den Merkmalen von Anspruch 1 und eine Geräte- und Anti-Vibrationslageranordnung mit den Merkmalen von Anspruch 9 vorgeschlagen. Weitere bevorzugte Ausführungsformen sind den Unteransprüchen, den Figuren und der zugehörigen Beschreibung zu entnehmen.

Gemäß dem Grundgedanken der Erfindung wird vorgeschlagen, dass in dem Dämpfungskörper eine oder mehrere Ausnehmungen vorgesehen sind, welche jeweils in eine Befestigungsöffnung einer der Befestigungsplatten münden und durch parallel zu der Befestigungsrichtung ausgerichtet zylindrische Freischnitte gebildet sind. Der Vorteil dieser Lösung ist darin zu sehen, dass das Geräte- und Anti-Vibrationslager durch ein durch den Dämpfungskörper und eine der Befestigungsplatte hindurchgreifendes Befestigungselement wie z.B. eine Schraube mit dem Fundament und/oder dem Gerät verbunden werden kann. Dabei sind bevorzugt wenigstens zwei Ausnehmungen vorgesehen, wobei eine erste Ausnehmung in die Befestigungsöffnung der ersten Befestigungsplatte mündet, und eine zweite Ausnehmung in die Befestigungsöffnung der zweiten Befestigungsplatte mündet, wobei die erste und die zweite Ausnehmung auf unterschiedlichen Seiten des Dämpfungskörpers angeordnet sind. Die Ausnehmungen sind auf unterschiedlichen Seiten angeordnet, so dass auch die Befestigung an dem Fundament und an dem Gerät über unterschiedliche Seiten des Dämpfungskörpers erfolgt. Weiter wird vorgeschlagen, dass sich die zylindrischen Freischnitte ausgehend von den in Bezug zu den Befestigungsrichtungen schrägen freien Oberflächen des Dämpfungskörpers durch den Dämpfungskörper hindurch, bis zu den Verbindungsflächen der ersten und zweiten Befestigungsplatten erstrecken, und die zylindrischen Freischnitte koaxial zu den Befestigungsöffnungen angeordnet sind und sich senkrecht zu ihren Längsachsen überlappen.

Durch die vorgeschlagene Ausbildung des Gerätelagers mit den Befestigungsplatten mit parallel und seitlich versetzten Krafteinleitungsflächen, wird der zwischen den Befestigungsplatten angeordnete Dämpfungskörper bei einer Lasteinleitung bewusst einer einseitigen Scherbelastung ausgesetzt, welche den Dämpfungskörper nach einer durch seine Auslegung vorbestimmten Belastung bewusst zu eine seitlichen Einknickbewegung zwingt. Diese Einknickbewegung kann durch die Bemessung des Dämpfungskörpers erheblich größer ausgelegt werden, als dies bei der im Stand der Technik bekannten Lösung der Fall war, da die Verformung des Dämpfungskörpers nicht durch einen anderen Dämpfungskörper oder einen anderen Wandabschnitt begrenzt wird. Durch diese bewusst nicht begrenzte Verformung kann ein wesentlich größerer Einfederweg realisiert werden. Ferner kann der Effekt der Frosch-Kennlinie, also der Extremwert in der Verformungskennlinie, bei der Ausübung von Druckkräften bei ungefähr gleichen maximalen Abmessungen des Geräte- und Anti-Vibrationslagers wesentlich deutlicher ausgeprägt werden.

Weiter wird vorgeschlagen, dass sich die Krafteinleitungsflächen der ersten und zweiten Befestigungsplatte in Richtung einer orthogonalen Krafteinleitung in die Krafteinleitungsflächen nicht überlappen. Durch die sich nicht überlappenden Krafteinleitungsflächen der beiden Befestigungsplatten können die Befestigungsplatten maximal zueinander einfedern, wobei sie sich im Extremfall bei einer entsprechenden Geometrie des Fundamentes und einer entsprechenden Verformungsfähigkeit des Dämpfungskörpers sogar aneinander vorbei bewegen könnten. Dieser Extremfall ist bei ebenen Fundamenten allerdings nicht zu realisieren und soll nur die erfindungsgemäß entfallene Begrenzung des Einfederweges veranschaulichen.

Weiter wird vorgeschlagen, dass der Abstand der Krafteinleitungsflächen der ersten und zweiten Befestigungsplatte in Richtung einer orthogonalen Krafteinleitung in die Krafteinleitungsflächen in einem Verhältnis von maximal 1,8 zu dem Federweg des Geräte- und Anti-Vibrationslager bei einem Federweg von größer als 70 mm, bevorzugt größer als 100 mm steht. Der maximal zu realisierende Federweg entspricht damit mehr als die Hälfte der Einbauhöhe, so dass auch sehr große Bewegungen des Gerätes oder des Fundamentes durch das Geräte- und Anti-Vibrationslager ausgeglichen werden können.

Ferner können die erste und die zweite Krafteinleitungsfläche bevorzugt eine identische Formgebung und Größe aufweisen. Damit kann das Geräte- und Anti-Vibrationslager in unterschiedlichen Ausrichtungen montiert werden, und es können identische Spannungs- und Kräfteverhältnisse in den Befestigungsplatten bzw. in den beiden Seiten des Dämpfungskörpers verwirklicht werden. Dabei können z.B. identische Befestigungsplatten verwendet werden, so dass das Geräte- und Anti-Vibrationslager punktsymmetrisch ausgebildet sein kann.

Weiter wird vorgeschlagen, dass der Dämpfungskörper durch einen Elastomerblock gebildet ist, und die erste und zweite Befestigungsplatte über parallel und versetzt zueinander ausgerichtete Verbindungsflächen mit dem Elastomerblock verbunden sind. Die Verwendung eines Elastomerblocks ermöglicht eine kompakte Ausführung des Geräte- und Anti-Vibrationslagers mit einer sehr hohen Energieaufnahme. Dabei werden die Druckkräfte durch die parallel und versetzt zueinander ausgerichteten Verbindungsflächen orthogonal in die beiden Enden des Elastomerblockes eingeleitet, so dass dieser bevorzugt durch Druckkräfte und Druckspannungen statisch belastet wird, wofür er besonders gut geeignet ist.

Dabei können die erste und die zweite Verbindungsfläche bevorzugt eine identische Formgebung und Größe aufweisen, so dass identischen Kräfteverhältnisse und Spannungen in dem Elastomerblock an seinen beiden Seiten realisiert werden können.

Weiter wird vorgeschlagen, dass der Elastomerblock in Form eines Parallelepipeds ausgebildet ist, wobei zwei seitlich versetzt und parallel zueinander ausgerichtete Seitenflächen zur Verbindung der Befestigungsplatten dienen.

Weiter können die erste und/oder zweite Befestigungsplatte den Dämpfungskörper mit einem Befestigungsabschnitt seitlich überragen, und in dem Befestigungsabschnitt kann wenigstens eine Befestigungsöffnung vorgesehen sein. Durch die vorgeschlagene Lösung kann das Gerätelager seitlich an einer angrenzenden Fläche eines Gerätes oder eines Fundamentes zusätzlich oder alternativ befestigt werden. Dabei können die Ausnehmungen in dem Dämpfungskörper entfallen, und der Dämpfungskörper kann entsprechend steifer und kompakter ausgebildet werden, sofern das Gerätelager ausschließlich über Befestigungsabschnitte der Befestigungsplatten befestigt wird.

Weiter wird zur Lösung der Aufgabe eine Geräte- und Anti-Vibrationslageranordnung mit wenigstens zwei derartigen Geräte- und Anti-Vibrationslagern vorgeschlagen, wobei die Geräte- und Anti-Vibrationslager mit den ersten Befestigungsplatten an einem Fundament befestigt und mit den zweiten Befestigungsplatten mit einem zu lagernden Gerät, einem zu lagernden Aggregat oder einer zu lagernden Anlage verbunden sind, und die zweiten Befestigungsplatten der Geräte- und Anti-Vibrationslager einen geringeren Abstand zueinander aufweisen als die ersten Befestigungsplatten der Geräte- und Vibrationslager. Die beiden Geräte- und Anti-Vibrationslager bilden damit insgesamt eine Lagerung mit in Richtung des Gerätes aufeinander zu verlaufenden Dämpfungskörpern.

Weiter können wenigstens zwei der Geräte- und Anti-Vibrationslager eine gemeinsame erste und/oder zweite Befestigungsplatte aufweisen. Die beiden Geräte- und Anti-Vibrationslager werden dann als vorgefertigte Baugruppe montiert und sind über die gemeinsame Befestigungsplatte miteinander verbunden.

Die Erfindung wird im Folgenden anhand bevorzugter Ausführungsformen unter Bezugnahme auf die beigefügten Figuren erläutert. Dabei zeigt:
- Fig. 1: ein im Stand der Technik bekanntes Geräte- und Anti-Vibrationslager mit einem hutförmigen Dämpfungskörper; und
- Fig. 2: eine Federkennlinie des im Stand der Technik bekannten Lagers; und
- Fig. 3 bis 6: ein erfindungsgemäßes Geräte- und Anti-Vibrationslager in verschiedenen Ansichten; und
- Fig. 7 und 8: verschiedene Federkennlinien mit einer linearen und einer abknickenden Federcharakteristik; und
- Fig. 9 und 10: verschiedene erfindungsgemäße Geräte- und Anti-Vibrationslageranordnungen.

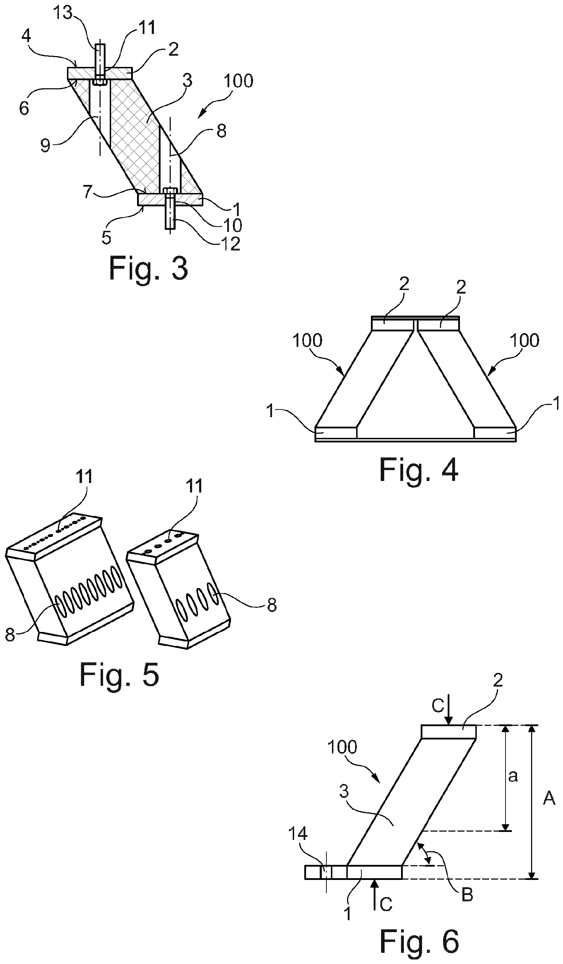

In der Figur 3 ist eine Schnittdarstellung eines erfindungsgemäßen Geräte- und Anti-Vibrationslagers zu erkennen, welches nachfolgend nur noch als Gerätelager 100 bezeichnet wird. Das Gerätelager 100 dient zur Befestigung von Geräten, Aggregaten oder ganzer Anlagen auf einem Fundament. Das Fundament kann beweglich auf einem Transportmittel wie z.B. einem Schiff oder einem Zug angeordnet sein und wird dadurch selbst Erschütterungen und äußeren Kräften ausgesetzt. Schiffe werden selbst z.B. durch den Seegang erheblichen äußeren Kräften und Bewegungen ausgesetzt, so dass die darauf gehaltenen Geräte, insbesondere elektronischen Geräte einer besonderen Lagerung bedürfen, damit die Geräte auch unter Extrembedingungen funktionsfähig sind. Alternativ kann das Fundament aber auch fest als ein Hallenboden oder als Teil einer Tragstruktur ausgebildet sein. Das erfindungsgemäße Gerätelager 100 ist gezielt zur Verwirklichung großer Federwege bei der Einwirkung von äußeren Kräften, Schwingungen oder Stößen in allen Raumrichtungen ausgelegt. Dabei resultieren die Belastungen des Gerätelagers 100 aus dem Eigengewicht des zu lagernden Gerätes, aus den von dem Fundament ausgehenden Vibrationen bzw. Stößen, wie z.B. den Bewegungen des Schiffes und aus den von dem zu lagernden Gerät selbst erzeugten Vibrationen und Stößen. Das Gerätelager 100 dient damit der Entkopplung des zu lagernden Gerätes von dem Fundament.

Das Gerätelager 100 weist einen Dämpfungskörper 3 in Form eines Parallelepipeds auf, welcher durch einen Elastomerkörper gebildet ist. Ferner weist das Gerätelager 100 an der Unterseite des Dämpfungskörpers 3 eine erste Befestigungsplatte 1 und der Oberseite des Dämpfungskörpers 3 eine zweite Befestigungsplatte 2 auf. Die erste und zweite Befestigungsplatte 1 und 2 sind jeweils durch eine Metallplatte mit einer konstanten Dicke gebildet und über Verbindungsflächen 6 und 7 an die parallel und versetzt zueinander ausgerichteten Stirnseiten des Elastomerblocks anvulkanisiert. Die erste und zweite Befestigungsplatte 1 und 2 bilden damit parallel und versetzt zueinander ausgerichtete Kraftangriffsflächen 4 und 5 aus.

Außerdem sind in dem Dämpfungskörper 3 zwei Ausnehmungen 8 und 9 vorgesehen, welche jeweils so angeordnet sind, dass sie jeweils in eine Befestigungsöffnung 10 und 11 einer der Befestigungsplatten 1 oder 2 mit oder ohne Gewinde münden. Die Ausnehmungen 8 und 9 sind durch parallel zu der Befestigungsrichtung ausgerichtete zylindrische Freischnitte gebildet, welche sich ausgehend von den in Bezug zu den Befestigungsrichtungen schrägen freien Oberflächen des Elastomerkörpers durch den Elastomerkörper hindurch, bis zu den Verbindungsflächen 6 und 7 der ersten und zweiten Befestigungsplatte 1 und 2 erstrecken. Die zylindrischen Freischnitte sind koaxial zu den Befestigungsöffnungen 10 und 11 angeordnet und überlappen sich senkrecht zu ihren Längsachsen aufgrund der schrägen Formgebung des Elastomerkörpers. Zur Befestigung des Gerätelagers 100 sind zwei Befestigungsschrauben 12 und 13 vorgesehen, welche zur Befestigung des Gerätelagers 100 soweit in die Ausnehmungen 8 und 9 eingeführt werden, dass sie mit ihren Gewindeschäften die Befestigungsöffnungen 10 und 11 durchgreifen und in entsprechenden Innengewinden des Fundamentes und des Gerätes verschraubt werden. Dabei gelangen sie mit ihrem Kopf an jeweils einer Verbindungsfläche 6 und 7 zur Anlage.

In der Figur 4 ist eine mögliche Anordnung von zwei Gerätelagern 100 zu erkennen, bei der die Gerätelager 100 so ausgerichtet sind, dass die ersten Befestigungsplatten 1 zur Befestigung an dem Fundament einen größeren Abstand zueinander aufweisen als die zweiten Befestigungsplatten 2 zur Befestigung des Gerätes.

Sofern das Gerätelager 100 aufgrund der Abmessung des zu lagernden Gerätes eine größere Breite senkrecht zu der Versatzrichtung der beiden Befestigungsplatten 1 und 2 aufweist, wie dies in der Figur 5 zu erkennen ist, können in dem Elastomerblock auch mehrere Ausnehmungen 8 und 9 und in den Befestigungsplatten 1 und 2 mehrere Befestigungsöffnungen 10 und 11 bevorzugt in einer Reihenanordnung vorgesehen sein.

In der Figur 6 ist ein erfindungsgemäßes Gerätelager 100 mit der Einbauhöhe A zu erkennen, welche durch den Abstand der in der Figur 3 zu erkennen den Krafteinleitungsflächen 4 und 5 definiert ist. Der Dämpfungskörper 3, in Form des Elastomerblocks, ist als ein Parallelepiped mit einem Winkel B in Bezug zu den Verbindungsflächen 6 und 7 der beiden Befestigungsplatten 1 und 2 ausgebildet und in der Einbauhöhe A so bemessen, dass sich die Krafteinleitungsflächen 4 und 5 bzw. die Befestigungsplatten 1 und 2 in Richtung der Krafteinleitungsrichtung C nicht überlappen. Durch die Formgebung des Dämpfungskörpers 3 weist das Gerätelager 100 einen Federweg a auf, welcher mindestens der Hälfte der Einbauhöhe A entspricht und besonders bevorzugt mindestens der Einbauhöhe A geteilt durch 1,8 entspricht. Der Federweg a beträgt bevorzugt wenigstens 70 mm und besonders bevorzugt wenigstens 100 mm. Ferner weist die erste Befestigungsplatte 1 seitlich einen vorstehenden Befestigungsabschnitt auf, in dem eine Befestigungsöffnung 14 vorgesehen ist. Das Gerätelager 100 kann damit außerhalb der Verbindungsfläche 7 des Dämpfungskörpers 3 an einem seitlichen Flächenabschnitt eines zu lagernden Gerätes oder eines Fundamentes befestigt werden. Der Befestigungsabschnitt der ersten Befestigungsplatte 1 erstreckt sich dabei von der zu der Versatzrichtung der zweiten Befestigungsplatte 2 entgegengesetzten Seite der ersten Befestigungsplatte 1, so dass die Oberfläche des Befestigungsabschnittes nicht von dem Dämpfungskörper 2 überdeckt wird und zur Befestigung z.B. mittels einer eingeführten Befestigungsschraube frei zugänglich ist.

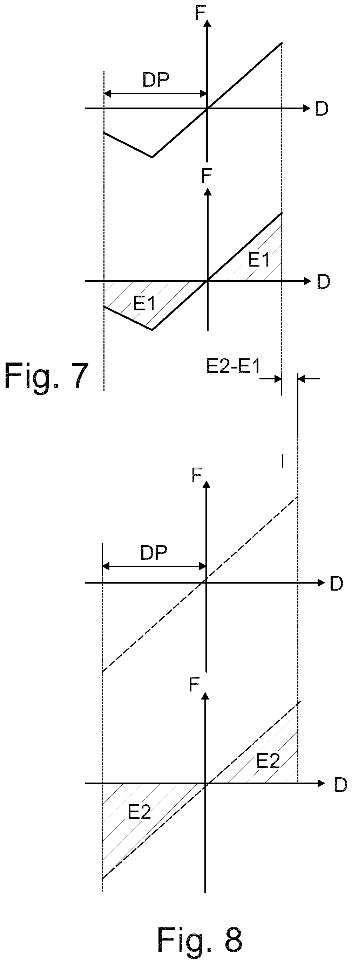

In den Figuren 7 und 8 sind unterschiedliche Federkennlinien zu erkennen, wobei in der Figur 7 eine sogenannte Frosch-Kennlinie mit einem ausgeprägten Extremwert der Rückstellkraft bei einer Druckbelastung und in der Figur 8 eine rein lineare Federkennlinie dargestellt ist.

Grundsätzlich ist es erstrebenswert, das Gerätelager 100 für möglichst niedrige Energieaufnahmen zu bemessen, da dadurch die Belastung der Geräte reduziert werden kann. Diese Energieaufnahme kann durch die Verwirklichung entsprechend großer Federwege in dem Gerätelager 100 reduziert werden. Wie in der Figur 7 zu erkennen ist, kann die Energieaufnahme E1 durch die abknickende Federkennlinie bei einer Druckbelastung DP des Gerätelagers 100 im Vergleich zu der Energieaufnahme E2 bei einer linearen Federkennlinie deutlich verringert werden. Damit ist es erstrebenswert, ein Gerätelager 100 mit einer Federkennlinie mit einem möglichst deutlich ausgeprägten Knick zu verwirklichen, was durch die erfindungsgemäße Lösung ermöglicht wird. Ziel ist es dabei, entsprechend große Federwege kontrolliert, d.h. bei einer möglichst hohen statischen Stabilität zu verwirklichen, was durch das erfindungsgemäße Gerätelager 100 ermöglicht wird. Die möglichen Federwege sind dabei bevorzugt größer als 70 mm und besonders bevorzugt größer als 100 mm. Denkbar sind dabei eine Einbauhöhe A von 226 mm bei einem nutzbaren Federweg a von 125 mm oder eine Einbauhöhe A von 235 mm bei einem nutzbaren Federweg a von 130 mm. Dabei ist das Gerätelager 100 bevorzugt so ausgelegt, dass die maximal bei dem Knick der Frosch-Kennlinie wirkende Druckkraft geteilt durch den Anteil des von dem Gerätelager 100 zu tragenden Teils der Masse 200 eine auf das Gerätelager 100 wirkende Beschleunigung von maximal 10 g ergibt.

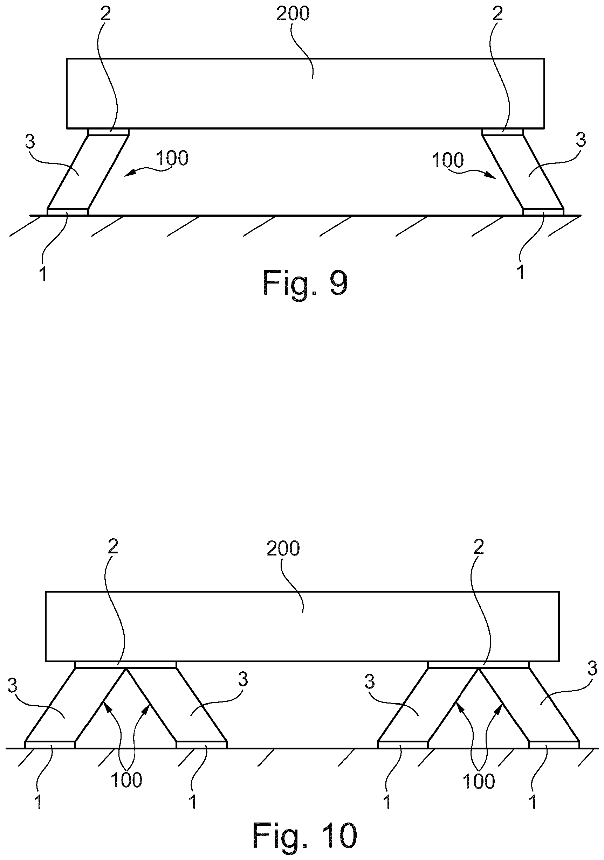

In den Figuren 9 und 10 sind zwei verschiedene, erfindungsgemäße Geräte- und Anti-Vibrationslageranordnungen mit zwei bzw. vier erfindungsgemäßen Gerätelagern 100 zur Lagerung einer stellvertretend für ein Gerät, ein Aggregat oder eine Anlage stehenden Masse 200 zu erkennen. Die Lageranordnung in der Figur 9 umfasst zwei Gerätelager 100, welche unter Bildung eines möglichst großen Abstandes zueinander, zwischen einer Unterseite der Masse 200 und einem Fundament, an dem rechten und linken Rand der Masse 200 befestigt sind. Die Gerätelager 100 sind dabei so ausgerichtet, dass die ersten Befestigungsplatten 1, mit denen die Gerätelager 100 an dem Fundament befestigt sind, einen größeren Abstand zueinander aufweisen als die zweiten, an der Masse 200 befestigten Befestigungsplatten 2. Damit erstrecken sich die Dämpfungskörper 3 ausgehend von der zu lagernden Masse 200 in Richtung der Außenseite der zu lagernden Masse 200 und werden dadurch bei der Ausübung von Schwingungen oder Stößen von der Masse 200 oder des Fundamentes in Verbindung mit dem Gewicht der Masse 200 bevorzugt Druckkräften ausgesetzt.

In der Figur 10 ist eine alternative Lageranordnung zu erkennen, bei der jeweils zwei Gerätelager 100 paarweise angeordnet und über jeweils eine gemeinsame zweite Befestigungsplatte 2 mit der Masse 200 befestigt sind. Die ersten, an dem Fundament befestigten Befestigungsplatten 1 weisen damit ebenfalls einen größeren Abstand zueinander auf als die in den zweiten, gemeinsamen Befestigungsplatten 2 vorgesehen Befestigungspunkte an der zu lagernden Masse 200. Selbstverständlich können die beiden Gerätelager 100 auch eine gemeinsame erste Befestigungsplatte 1 aufweisen, durch welche der Verbund der Gerätelager 100 zusätzlich versteift werden kann, indem die dem Fundament zugewandten Enden der Dämpfungskörper 3 der Gerätelager 100 zusätzlich über die gemeinsame erste Befestigungsplatte 1 miteinander verbunden sind.

Die Dämpfungskörper 3 sind jeweils als kompakte Elastomerkörper ausgebildet und damit speziell dazu geeignet, komplexe Druck- und Zugkräfte in allen drei Raumrichtungen aufzunehmen und zu dämpfen. Dabei ergibt sich aus dem Eigengewicht der zu lagernden Masse 200 eine Druckkraft, welche orthogonal zu den Krafteinleitungsflächen 4 und 5 der Gerätelager 100 also in Pfeilrichtung C der Darstellung in der Figur 6 gerichtet ist. Diese Druckkraft wird dann aufgrund der Schwingungen der Masse 200 oder des Fundamentes mit zusätzlichen Druckkräften oder Zugkräften überlagert, wodurch die Druckbelastung in dem Dämpfungskörper 3 des Gerätelagers 100 entweder erhöht wird oder bei der Ausübung von Zugkräften reduziert oder sogar insgesamt in eine Zugbelastung umgekehrt wird. Die mittlere Grundbelastung bleibt dabei eine Druckbelastung, zu dessen Aufnahme das erfindungsgemäße Gerätelager 100 besonders bevorzugt geeignet sind.

## Patentansprüche

1. Geräte- und Anti-Vibrationslager (100) zur Lagerung eines Gerätes (200), eines Aggregates oder einer Anlage mit
- einer ersten Befestigungsplatte (1),
- einer zweiten Befestigungsplatte (2),
- einem zwischen der ersten Befestigungsplatte (1) und der zweiten Befestigungsplatte (2) an Verbindungsflächen (6,7) gehaltenen Dämpfungskörper (3), wobei
- die erste und zweite Befestigungsplatte (1,2) parallel und seitlich versetzt zueinander ausgerichtete Krafteinleitungsflächen (4,5) aufweisen, wobei
- in dem Dämpfungskörper (3) eine oder mehrere Ausnehmungen (8,9) vorgesehen sind, welche jeweils in eine Befestigungsöffnung (10,11) einer der Befestigungsplatten (1,2) münden und durch parallel zu der Befestigungsrichtung ausgerichtete zylindrische Freischnitte gebildet sind, wobei
- wenigstens zwei Ausnehmungen (8,9) vorgesehen sind, und
- eine erste Ausnehmung (8) in die Befestigungsöffnung (10) der ersten Befestigungsplatte (1) mündet, und
- eine zweite Ausnehmung (9) in die Befestigungsöffnung (11) der zweiten Befestigungsplatte (2) mündet, und
- die erste und die zweite Ausnehmung (8,9) auf unterschiedlichen Seiten des Dämpfungskörpers (3) angeordnet sind, **dadurch gekennzeichnet, dass** die zylindrischen Freischnitte sich ausgehend von den in Bezug zu den Befestigungsrichtungen schrägen freien Oberflächen des Dämpfungskörpers (3) durch den Dämpfungskörper (3) hindurch, bis zu den Verbindungsflächen (6,7) der ersten und zweiten Befestigungsplatte (1,2) erstrecken, wobei
- die zylindrischen Freischnitte koaxial zu den Befestigungsöffnungen (10,11) angeordnet sind und sich senkrecht zu ihren Längsachsen überlappen.

2. Geräte- und Anti-Vibrationslager (100) nach Anspruch 1, **dadurch gekennzeichnet, dass**
- sich die Krafteinleitungsflächen (4,5) der ersten und zweiten Befestigungsplatte (1,2) in Richtung einer orthogonalen Krafteinleitung in die Krafteinleitungsflächen (4,5) nicht überlappen.

3. Geräte- und Anti-Vibrationslager (100) nach einem der Ansprüche 1 oder 2, **dadurch gekennzeichnet, dass**
- der Abstand der Krafteinleitungsflächen (4,5) der ersten und zweiten Befestigungsplatte (1,2) in Richtung einer orthogonalen Krafteinleitung in die Krafteinleitungsflächen in einem Verhältnis von maximal 1,8 zu dem Federweg (a) des Geräte- und Anti-Vibrationslager bei einem Federweg (a) von größer als 70 mm, bevorzugt größer als 100 mm steht.

4. Geräte- und Anti-Vibrationslager (100) nach einem der Ansprüche 1 bis 3, **dadurch gekennzeichnet, dass**
- die erste und die zweite Krafteinleitungsfläche (4,5) eine identische Formgebung und Größe aufweisen.

5. Geräte- und Anti-Vibrationslager (100) nach einem der vorangegangenen Ansprüche, **dadurch gekennzeichnet, dass**
- der Dämpfungskörper (3) durch einen Elastomerblock gebildet ist, und
- die erste und zweite Befestigungsplatte (1,2) über parallel und versetzt zueinander ausgerichtete Verbindungsflächen (6,7) mit dem Elastomerblock verbunden sind.

6. Geräte- und Anti-Vibrationslager (100) nach Anspruch 5, **dadurch gekennzeichnet, dass**
- die erste und die zweite Verbindungsfläche (4,5) eine identische Formgebung und Größe aufweisen.

7. Geräte- und Anti-Vibrationslager (100) nach Anspruch 5 oder 6, **dadurch gekennzeichnet, dass**
- der Elastomerblock in Form eines Parallelepipeds ausgebildet ist.

8. Geräte- und Anti-Vibrationslager (100) nach einem der vorangegangenen Ansprüche, **dadurch gekennzeichnet, dass**
- die erste und/oder zweite Befestigungsplatte (1,2) den Dämpfungskörper (3) mit einem Befestigungsabschnitt (14) seitlich überragen, und
- in dem Befestigungsabschnitt (14) wenigstens eine Befestigungsöffnung (10,11) vorgesehen ist.

9. Geräte- und Anti-Vibrationslageranordnung, **dadurch gekennzeichnet, dass**
- wenigstens zwei Geräte- und Anti-Vibrationslager (100) mit den Merkmalen von einem der Ansprüche 1 bis 8 vorgesehen sind, wobei
- wenigstens zwei der Geräte- und Anti-Vibrationslager mit den ersten Befestigungsplatten (1) an einem Fundament befestigt und die zweiten Befestigungsplatten (2) mit einem zu lagernden Gerät, einem zu lagernden Aggregat oder einer zu lagernden Anlage verbunden sind, und
- die zweiten Befestigungsplatten (2) der Geräte- und Anti-Vibrationslager einen geringeren Abstand zueinander aufweisen als die ersten Befestigungsplatten (1) der Geräte- und Vibrationslager.

10. Geräte- und Anti-Vibrationslageranordnung nach Anspruch 9, **dadurch gekennzeichnet, dass**
- wenigstens zwei der Geräte- und Anti-Vibrationslager (100) eine gemeinsame erste und/oder zweite Befestigungsplatte (1,2) aufweisen.

## Claims

1. Appliance- and anti-vibration mount (100) for mounting an appliance (200), a unit or an installation, comprising
- a first fastening plate (1),
- a second fastening plate (2),
- a damping body (3) held on connecting surfaces (6, 7) between the first fastening plate (1) and the second fastening plate (2), wherein
- the first and second fastening plate (1, 2) have force introduction surfaces (4, 5) which are aligned in parallel with and laterally offset from one another, wherein
- one or more recesses (8, 9) are provided in the damping body (3), which recesses each open into a fastening opening (10, 11) of one of the fastening plates (1, 2) and are formed by cylindrical cut-outs aligned in parallel with the fastening direction, wherein
- at least two recesses (8, 9) are provided, and
- a first recess (8) opens into the fastening opening (10) of the first fastening plate (1), and
- a second recess (9) opens into the fastening opening (11) of the second fastening plate (2), and
- the first and second recess (8, 9) are arranged on different sides of the damping body (3), **characterized in that** the cylindrical cut-outs extend, starting from the free surfaces of the damping body (3) which are inclined with respect to the fastening directions, through the damping body (3) as far as the connecting surfaces (6, 7) of the first and second fastening plate (1, 2), wherein
- the cylindrical cut-outs are arranged coaxially with the fastening openings (10, 11) and overlap perpendicularly to the longitudinal axes thereof.

2. Appliance- and anti-vibration mount (100) according to claim 1,
**characterized in that**
- the force introduction surfaces (4, 5) of the first and second fastening plate (1, 2) do not overlap in the direction of orthogonal force introduction into the force introduction surfaces (4, 5).

3. Appliance- and anti-vibration mount (100) according to either claim 1 or 2, **characterized in that**
- the distance between the force introduction surfaces (4, 5) of the first and second fastening plate (1, 2) in the direction of orthogonal force introduction into the force introduction surfaces is in a ratio of at most 1.8 to the spring travel (a) of the appliance- and anti-vibration mount with a spring travel (a) of greater than 70 mm, preferably greater than 100 mm.

4. Appliance- and anti-vibration mount (100) according to any of claims 1 to 3, **characterized in that**
- the first and second force introduction surfaces (4, 5) have an identical shape and size.

5. Appliance- and anti-vibration mount (100) according to any of the preceding claims, **characterized in that**
- the damping body (3) is formed by an elastomer block, and
- the first and second fastening plate (1, 2) are connected to the elastomer block by connecting surfaces (6, 7) which are aligned in parallel with and offset from one another.

6. Appliance- and anti-vibration mount (100) according to claim 5,
**characterized in that**
- the first and second connecting surface (4, 5) have an identical shape and size.

7. Appliance- and anti-vibration mount (100) according to claim 5 or 6,
**characterized in that**
- the elastomer block is in the form of a parallelepiped.

8. Appliance- and anti-vibration mount (100) according to any of the preceding claims, **characterized in that**
- the first and/or second fastening plate (1, 2) project laterally beyond the damping body (3) by a fastening portion (14), and
- at least one fastening opening (10, 11) is provided in the fastening portion (14).

9. Appliance- and anti-vibration mounting arrangement, **characterized in that**
- at least two appliance- and anti-vibration mounts (100) having the features of any of claims 1 to 8 are provided, wherein
- at least two of the appliance- and anti-vibration mounts are attached to a foundation by the first fastening plates (1), and the second fastening plates (2) are connected to an appliance to be mounted, a unit to be mounted or an installation to be mounted, and
- the second fastening plates (2) of the appliance- and anti-vibration mounts are at a smaller distance from one another than the first fastening plates (1) of the appliance- and anti-vibration mounts.

10. Appliance- and anti-vibration mounting arrangement according to claim 9, **characterized in that**
- at least two of the appliance- and anti-vibration mounts (100) have a common first and/or second fastening plate (1, 2).

## Revendications

1. Support d'appareil et antivibratoire (100) pour supporter un appareil (200), un groupe ou une installation, comportant :
- une première plaque de fixation (1),
- une deuxième plaque de fixation (2),
- un corps d'amortissement (3) maintenu entre la première plaque de fixation (1) et la deuxième plaque de fixation (2) au niveau de surfaces de liaison (6, 7), dans lequel
- la première et la deuxième plaque de fixation (1, 2) présentent des surfaces d'introduction de force (4, 5) orientées parallèlement et décalées latéralement l'une par rapport à l'autre, dans lequel
- un ou plusieurs évidements (8, 9) sont prévus dans le corps d'amortissement (3), lesquels débouchent respectivement dans une ouverture de fixation (10, 11) d'une des plaques de fixation (1, 2) et sont formés par des découpes libres cylindriques orientées parallèlement à la direction de fixation, dans lequel
- au moins deux évidements (8, 9) sont prévus, et
- un premier évidement (8) débouche dans l'ouverture de fixation (10) de la première plaque de fixation (1), et
- un deuxième évidement (9) débouche dans l'ouverture de fixation (11) de la deuxième plaque de fixation (2), et
- le premier et le deuxième évidement (8, 9) sont disposés sur des côtés différents du corps d'amortissement (3),
**caractérisé en ce que**
les découpes libres cylindriques s'étendent à partir des surfaces libres du corps d'amortissement (3) obliques par rapport aux directions de fixation, à travers le corps d'amortissement (3), jusqu'aux surfaces de liaison (6, 7) de la première et la deuxième plaque de fixation (1, 2), dans lequel
- les découpes libres cylindriques sont disposées coaxialement aux ouvertures de fixation (10, 11) et se chevauchent perpendiculairement à leurs axes longitudinaux.

2. Support d'appareil et antivibratoire (100) selon la revendication 1, **caractérisé en ce que**
- les surfaces d'introduction de force (4, 5) de la première et de la deuxième plaque de fixation (1, 2) ne se chevauchent pas dans la direction d'une introduction de force orthogonale dans les surfaces d'introduction de force (4, 5).

3. Support d'appareil et antivibratoire (100) selon l'une des revendications 1 ou 2, **caractérisé en ce que**
- la distance entre les surfaces d'introduction de force (4, 5) de la première et de la deuxième plaque de fixation (1, 2) dans la direction d'une introduction de force orthogonale dans les surfaces d'introduction de force est dans un rapport de 1,8 au maximum par rapport à la course élastique (a) du support d'appareil et antivibratoire pour une course élastique (a) supérieure à 70 mm, de préférence supérieure à 100 mm.

4. Support d'appareil et antivibratoire (100) selon l'une des revendications 1 à 3, **caractérisé en ce que**
- la première et la deuxième surface d'introduction de force (4, 5) présentent une forme et une taille identiques.

5. Support d'appareil et antivibratoire (100) selon l'une des revendications précédentes, **caractérisé en ce que**
- le corps d'amortissement (3) est formé par un bloc d'élastomère, et
- la première et la deuxième plaque de fixation (1, 2) sont reliées au bloc d'élastomère par des surfaces de liaison (6, 7) orientées parallèlement et décalées l'une par rapport à l'autre.

6. Support d'appareil et antivibratoire (100) selon la revendication 5, **caractérisé en ce que**
- la première et la deuxième surface de liaison (4, 5) présentent une forme et une taille identiques.

7. Support d'appareil et antivibratoire (100) selon la revendication 5 ou 6, **caractérisé en ce que**
- le bloc d'élastomère est réalisé sous la forme d'un parallélépipède.

8. Support d'appareil et antivibratoire (100) selon l'une des revendications précédentes, **caractérisé en ce que**
- la première et/ou la deuxième plaque de fixation (1, 2) dépassent latéralement du corps d'amortissement (3) par une section de fixation (14), et
- au moins une ouverture de fixation (10, 11) est prévue dans la section de fixation (14).

9. Agencement de supports d'appareil et antivibratoires, **caractérisé en ce que**
- il est prévu au moins deux supports d'appareil et antivibratoires (100) présentant les caractéristiques de l'une des revendications 1 à 8, dans lequel
- au moins deux des supports d'appareil et antivibratoires sont fixés à une fondation par les premières plaques de fixation (1) et les deuxièmes plaques de fixation (2) sont reliées à un appareil à supporter, à un groupe à supporter ou à une installation à supporter, et
- les deuxièmes plaques de fixation (2) des supports d'appareil et antivibratoires présentent entre elles une distance inférieure à celle des premières plaques de fixation (1) des supports d'appareil et antivibratoires.

10. Agencement de supports d'appareil et antivibratoires selon la revendication 9, **caractérisé en ce que**
- au moins deux des supports d'appareil et antivibratoires (100) présentent une première et/ou une deuxième plaque de fixation (1, 2) commune.
